# EUROPEAN PATENT APPLICATION

(11) **EP 2 824 884 A1**
(43) Date of publication of application: **14.01.2015**
(21) Application number: 13290163.8
(22) Date of filing: 12.07.2013
(51) Int. Cl.: H04L 29/06, H04N 21/4728, H04N 21/845

(54) **A video client for smooth display of a panoramic video**

(71) Applicant: ALCATEL LUCENT, 92100 Boulogne-Billancourt (FR)
(72) Inventor: De Vleeschauwer, Bart, 2970 Schilde (BE); Rondao Alface, Patrice, 1400 Nivelles (BE); Macq, Jean-François, 1083 Ganshoren (BE)
(74) Representative: Plas, Axel Ivo Michel

(57) **Abstract**

To display panoramic video in a video client (100), a manifest parser (116) produces manifest information about segments of the video. A buffer (112) temporarily stores segments of the panoramic video. A display (114) fetches segments from the buffer (112) and displays a region of interest using these segments. A tracker component (113) tracks the user's region of interest. A downloader (111) sends a request for a panoramic video to a server (102) and receives selected segments of selected tiles in response and stores them in the buffer (112). A decision component (115) estimates a future region of interest to be displayed by the display in a later time interval. It then selects the selected segments based on the manifest information and future region of interest, generates the request for the downloader and instructs the downloader to send the request.

## Description

### Field of the Invention

The present invention generally relates to the display of a panoramic video on a client device. Therein, a client typically consumes a subset of the panoramic content, named the viewport according to the user's region of interest. The present invention in particular concerns retrieval and selection of panoramic video with optimizations on the client side.

### Background of the Invention

A panoramic or omnidirectional video represents a video item, i.e. files or streams, wherein the field of view is larger than 120 degrees. The resolution of such a video may range beyond High Definition (HD), e.g. 4K ultra high definition (UHD) video at 8.3 megapixels or 8K UHD video at 33.2 megapixels, whatever the field of view is.

When watching such a panoramic video on a display of a client device, a region of interest (ROI) is defined by a user or by any other means defining a view or viewport on this panoramic video. This ROI may be obtained in several ways. The user may for example draw or define a rectangular area within the total area covered by the panoramic video, or he performs a zooming action. Selecting the ROI may also be done based on content instead of area. The user then select an object he wants to follow within the panoramic video, for example the lead singer of a band. Typically the panoramic video content is residing on a server or content delivery network (CDN) and the video content is streamed to a client for display.

Several solutions exist for streaming panoramic video to a client device without the need to download the complete video content but only the needed content defined by the region of interest.

In P. Quax and al, "Evaluation of Distribution of Panoramic Video Sequences in the eXplorative Television Project", Proceeding of The 22nd ACM Workshop on Network and Operating Systems Support for Digital Audio and Video (NOSSDAV 2012), Toronto, Canada, June 7-8, 2012, and in Omar A. and all, "Spatial Tiling And Streaming In An Immersive Media Delivery Network", EurolTV 2011, Lisbon, Portugal, 29th June 2011 as well as in O. Niamut and all, "Towards Scalable And Interactive Delivery of Immersive Media", Proceedings of the NEM Summit, pp. 69-74, Istambul, Turkey, 16-18 October 2012, extensions to HTTP adaptive streaming (HAS) are proposed to accomplish panoramic video streaming.

In a HAS session, a video stream is divided in time in several video segments. Each segment may also be available in different versions or qualities defined by the codec used for the encoding, the resolution of the segment, the maximum bit rate or other quality related parameters. In a typical HAS session, a client will then stream a video on a segment by segment basis selecting for each segment an appropriate quality. These segment are thus subsequent temporal portions typically of equal length, e.g. 4 seconds. This allows to start the play of a video stream as soon as a first segment has been retrieved. It also allows to adaptively change the quality of the segments, for example based on the bandwidth available. A HAS session assumes that information is available about the segments, i.e. the time intervals of each segment and available qualities. In many cases, this information is available as a separate file, a so called manifest file. Several protocols are known in the art implementing HAS such as HTTP Live Streaming by Apple (HLS), Microsoft Smooth Streaming (MSS) by Microsoft, HTTP Dynamic Streaming (HDS) by Adobe and Dynamic Adaptive Streaming over HTTP defined by the 3GPP standard (DASH).

In the extensions to HAS for panoramic video, the panoramic video is spatially divided in tiles, i.e. video tiles, where each video tile corresponds to a video stream that is available through a corresponding HAS session. Tiles in other words represent spatial parts of the panoramic video, each covering a rectangular part of the entire surface or field of view of the panoramic video. It is noticed that a tile may also cover the entire field of view. Different tiles may have different sizes, they may be spatially separated or be spatially overlapping. Further, a single tile may be available in different versions, each version representing a different quality or encoding/decoding resolution..In these extensions, extensions to the manifest file are proposed to define the tiles and point to the corresponding video streams and segments within the video streams. When watching a panoramic video according to these extensions, the user indicates his region of interest, i.e. the portion of the entire field of view that he desires to display. The one or more tile covering the user's region of interest are then streamed to the client and displayed.

A problem with these extensions of HAS for panoramic video is that the region of interest may move along tiles or even jump across several tiles at once depending on the user's interactions. At that point in time, the client does not have the appropriate tile and, thus, segment available to render the viewport defined by the region of interest. This results in a pause or stall of the video stream until the appropriate segment or segments are downloaded covering the region of interest.

It is the object of the invention to overcome the above problem.

### Summary of the Invention

This is achieved by a video client according to claim 1.

While the display is thus displaying the current region of interest, i.e. during the first time interval, the decision component estimates a future region of interest that the might be displayed later on, i.e. during a second time interval. As this future region of interest relates to a spatial dimension, corresponding tiles that are partly or completely overlapping with the future region of interest can be identified based on the position information from the manifest information. As the second time interval relates to a time dimension, the specific segments of the tiles can be selected that cover this second time interval. The selected segments are then downloaded and put in the buffer while displaying segments and thus a region of interest for a previous time interval. When the display then, later on, arrives at this second time interval the segments will be in the buffer already. Thus, the display does not have to wait for the downloader to retrieve the selection. Therefore, it is an advantage that the display will display a smooth video without stalls.

The server may be a single server available on a local area network (LAN) or the internet, but may also be an assembly of servers often referred to as a Content Delivery Network or Content Distribution Network (CDN). The segments may then be spread on several servers within the CDN, or replicated on caching server or proxy server that are part of this CDN.

The current region of interest is an area within said panoramic video. The area may be defined in several ways, for example by interactions of a user with the display such as drawing a rectangle on the display, a panning operation and thus moving the region of interest along the area of the panoramic video or a zooming operation and thus making the region of interest bigger or smaller in size.

The manifest information may further be obtained by parsing a manifest file received form the server. This allows to centralize all segment and tile information and make it available together with the panoramic video. Furthermore the manifest information may comprise quality information about the quality or the size of said segments, for example information about the resolution of each segment or the bit rate used for encoding segments. This allows to provide several versions of a segment for each time Interval within a tile. The decision component can further use this quality information to select the segments. For example, if two tiles with different resolutions would cover the future region of interest, the tile's resolution that fits best the resolution of the display would be selected by the decision component. Therefore, less data will have to be downloaded and the delay for downloading a segment will be smaller, improving the interactivity time of the panoramic video.

The decision component may also be adapted to flush one or more segments from the buffer.

The decision component may then flush the buffer if the next segments do not cover the current region of interest and fetch new and correct segments from the server. As the buffer may comprise segments for several time intervals and not just the next time interval, the decision component may also re-estimate a future region of interest for a time interval that is already covered by segments in the buffer. If the estimation turns out to be different from the initial one, the decision component may then flush these segments and optionally also the following segments, select new segments according to the re-estimated future region of interest, download them and store them in the buffer. It is thus an advantage that, by flushing the buffer, corrected segments can be downloaded and stored in the buffer while guaranteeing a continuous display of the panoramic video.

The video client further may further comprise a bandwidth tracker adapted to calculate bandwidth information comprising information from the downloader about the speed of receiving. The decision component is then further adapted to select the one or more selected segments based in this bandwidth information.

It is an advantage that by taking into account the bandwidth information, the time to retrieve selected segments can be taken into account. The decision component can then instruct the downloader at a moment in time such that the selected segments arrive just in time, i.e. just before the second time interval or such that the buffer is always filled with a minimum number of segments. It is a further advantage that a segment is thus guaranteed to arrive before it will be fetched by the display from the buffer.

When the client comprises such a bandwidth tracker and when the manifest information comprises quality information, the decision component of the client may be further adapted to calculate a download time interval as a time interval for receiving the one or more selected segment from the server based on the quality information and the bandwidth information. The one or more selected segment have then the highest quality while this calculated download time interval ends before the second time interval.

In other words, after selecting segments that cover the future region of interest both in time and position, the decision component may still end up with segments of different quality to choose from. The decision component will then calculate how long it would take to download each of the segments according to a certain quality and pick the one with the highest quality as long as it can be downloaded before the start of the second time interval, i.e. before the segment will be fetched by the display from the buffer. This has the advantage the highest quality possible is shown on the display while limiting possible stalls.

In an alternative implementation, when the client comprises such a bandwidth tracker and when the manifest information comprises quality information the decision component is further able to calculate a download time interval as a time interval for receiving the one or more selected segment from the server based on this quality information and the bandwidth information. The one or more selected segments have then the highest quality while the download interval ends before a moment in time where said buffer has less than a minimal number of segments or less than a minimal amount of seconds for playing all segments from said buffer..

Again, the decision component thus ends up with selected segments of different qualities to choose from. Now, the decision component will select the one or more selected segment such that they are downloaded from the server and stored in the buffer before the buffer is under a minimal buffer level or thus a minimum number of segments. As the segments in the buffer have a known time interval, this can also be specified as a minimal amount of seconds before the buffer would be empty when playing all remaining segments from the buffer. It is an advantage that, if network fluctuations would slow down the downloading of the selected segment unexpectedly, the display can still fetch segments from the buffer and continue the display of the panoramic video, guaranteeing an uninterrupted display.

According to a preferred embodiment the decision component comprised in the client is further able to extrapolate the tracked region of interest in time to obtain a first estimated region of interest for the second time interval. The estimated future region of interest then covers this estimated region of interest.

In other words, as the dynamic behaviour of the region of interest is tracked along the already displayed panoramic video by the tracker component, the decision component will be able to estimate the size and position of the region of interest during the second time interval based on the history of the region of interest. As the history of the region of interest is taken into account, the selected segments may fall outside the current region of interest even not adjacent to it. For example, when the region of interest is moving across the panoramic video by a panning operation, the decision component will be able to predict where the region of interest will be at some later time and select the tile and thus segments accordingly. The future region of interest is then chosen such that the estimated region of interest covers this region.

Alternatively the decision component may also estimate a future region of interest that covers at least the area of the current region of interest. This has the advantage that the estimation of the future region of interest is simple as no complex extrapolation has to be performed as in the embodiment above. The future region of interest may be made larger than the current region of interest so that small changes to the current region of interest will not result in flushing the buffer and a stall of the video.

According to a further embodiment, the manifest information comprises meta information about content of a tile in the panoramic video. The tracker component is then able to relate this meta information, i.e. related meta information, with a tracked region of interest within the tracked region of interest information if the meta information corresponds to a tile overlapping the tracked region of interest. The decision component is then further able to obtain a second estimated region of interest for the second time interval based on this related meta information. The future region of interest then covers this second estimated region of interest.

In other words, the tracker component will check if the tracked region of interest correlates with some of the meta information from the manifest information. If so, there is a high change that the tracked region of interest is actually defined by the content specified in the meta information. The decision component then estimates a future region of interest that covers the tile related to the specific meta information. It is an advantage that the future region of interest is more accurately predicted this way. For example, sudden changes in the region of interest may be anticipated by this technique while the estimation by extrapolation may fail to do so.

It should be noted that several embodiments for estimating the future region of interest may combined. For example, an estimated future region of interest may both cover the current region of interest and an extrapolated region of interest.

### Brief Description of the Drawings

Fig. 1 illustrates a video client according to an embodiment of the present invention;

Fig. 2 illustrates how tiles may be located within the area covered by the panoramic video;

Fig. 3 illustrates buffer allocation as a function of time in a video client according to an embodiment of the present invention.

### Detailed Description of Embodiment(s)

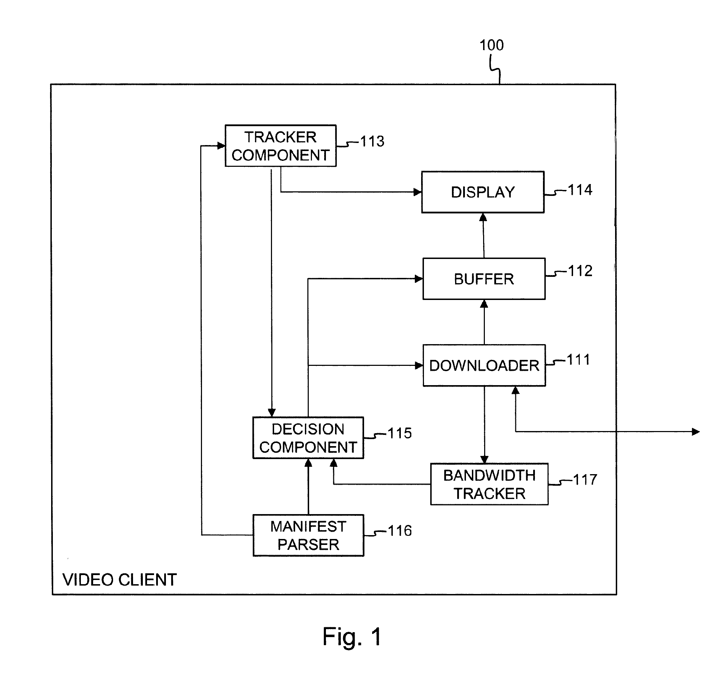

Fig. 1 illustrates a video client according to an embodiment of the present invention for displaying a panoramic video. The client 100 comprises a manifest parser 116 for parsing a manifest file. The manifest file is obtained before the start of the panoramic video and comprises all the information necessary for playing the panoramic video on a display 114. The manifest file is stored on a server or content delivery network (CDN) that also stores the panoramic video. The client then obtains a link to the manifest file, for example through a web page, and downloads the manifest file. The manifest file defines all the tiles of the panoramic video as separate video streams. By the parsing of the file, the manifest parser 116 obtains a mapping between the tiles of the panoramic video and the region of interest that is to be displayed on the display 114. The video stream according to a certain tile is further split up in segments, each segment covering a certain time frame or interval of the panoramic video. All these segments are also defined by the manifest as well as the location of the segments by their respective tile. By the parsing of the manifest file, the manifest parser 116 thus obtains information on both the spatial position as well as the position in time of the segments available on the server.

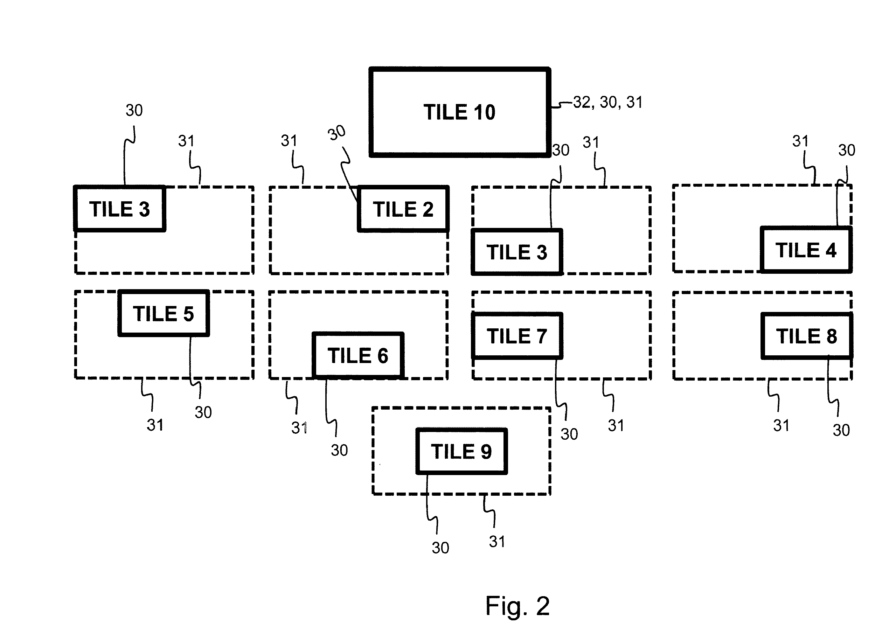

Fig. 2 illustrates how the tiles 30 may be defined within the full spatial area 31 of the panoramic video. The tiles do not have to be a division of the area 31 in tiles 30. Tiles may be overlapping, sharing a part of the area 31. A tile 32 may also cover the complete area of the panoramic video, or a tile may be completely comprised within another tile. Furthermore, a tile may be dynamic, i.e. its position may change in time. Segments of such a tile may thus cover a different area of the panoramic video. In addition, the tiles may be represented at multiple resolutions. The tile resolution may be identical to the original resolution of the recorded panoramic video or, alternatively, a tile may contain a rescaled portion, i.e. may be in a lower resolution than the original recorded panorama video.

The display 114 displays a region of interest (ROI) of the panoramic video in a window. Along the progression of the video, the ROI may change and thus move along the area of the panoramic video. The ROI may also change in size by a zooming action. At any time during the playback of the panoramic video, the ROI is available to the display 114. To display the ROI, the display 114 fetches one or more segments from the buffer 112. In the case the ROI is comprised within a single tile, only one segment is requested and fetched from the buffer 112 and the complete tile or a crop of the tile is shown by the display. In the case the ROI covers more than one tile, the buffer 112 may contain segments from several tiles. The display 114 then combines the segments to display the ROI.

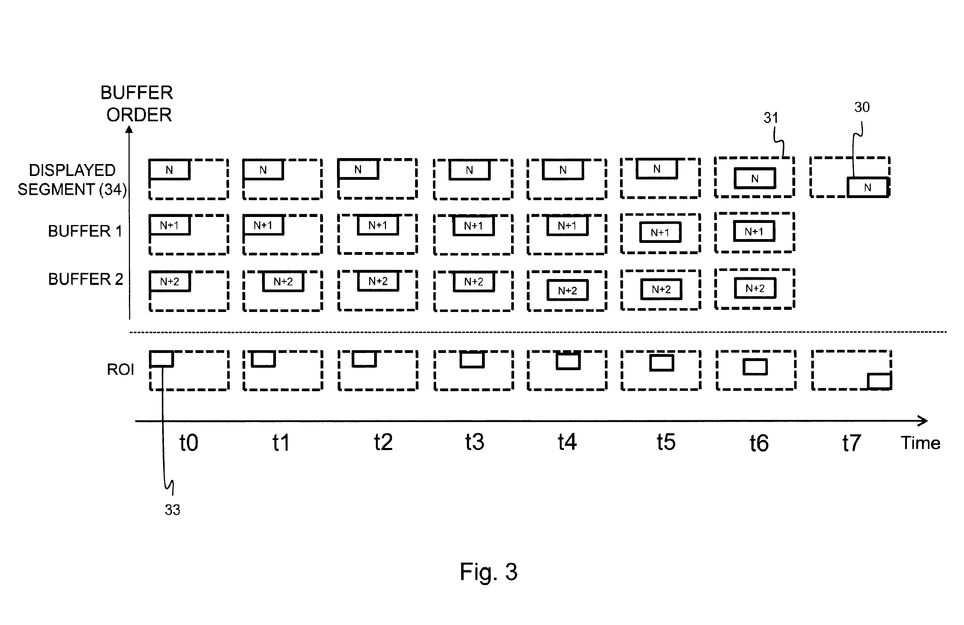

Once one or more segments for a specific time interval are removed from the buffer 112 for playing, the next segments for a next time interval are available in the buffer. Fig. 3 illustrates how segments reside in the buffer during playback of the panoramic video. At a time t0, the buffer is filled with three segments N, N+1 and N+2 where segment N is the segment at the top of the buffer to be played at time t0, segment N+1 the segment to be played at time t1 and segment N+2 the segment at the bottom of the buffer to be played at time t2. As the tile covered by the segments N+1 and N+2 is the same at time t0, it is assumed that the ROI will remain within this tile at least until time t2. In the next time interval t1, the segments move up one position in the buffer. Segment N+1 at time t0 thus becomes segment N at time t1 and segment N+2 becomes segment N+1. A new segment N+2 is added to the bottom of the buffer. As, at the time of displaying the ROI with a segment N, it is not yet known what the future region of interest will be for next time intervals, , it may be that the segment does not cover the ROI when the segment becomes available for display or even before. Therefore, the buffer can also be flushed, i.e. segments may be removed from the buffer. This is illustrated in Fig. 3 when moving from time t6 to t7. The segments N+1 and N+2 at time t6 do not cover the ROI at time t7. Therefore, the buffer is flushed and a new segment N is added to the buffer at time t7. This may result in a short stall of the panoramic video as this segment N is not yet available in the buffer and, hence, in the client as the segment still has to be downloaded from the server.

The prediction of the segments to be used for the display of the ROI is performed by the decision component 115. To do so, the decision component first estimates a region of interest, i.e. a future region of interest, that the display will have to display during a later time interval. To do so, it uses information from the tracker component 113. This tracker component keeps track of the region of interest that has already been displayed, i.e. it provides the history of the region of interest or tracked region of interest information. The decision component then uses this tracked region of interest information to estimate the future region of interest.

Using the future region of interest, the decision component then selects tiles that cover this future region of interest during the time interval the future region of interest will be displayed by the display 114. This may be done for example by selecting the smallest tile covering the future region of interest. This way, only one segment will have to be selected to display this future region of interest. Alternatively, several tiles may be selected that cover the future region of interest. The selection of the tiles is done according to the position information provided by the manifest parser. From the manifest parser 116, the decision component has also time information available on the time intervals of all segments in the panoramic video and thus selects the segments from the selected tiles covering the time interval during which the future region of interest will be displayed.

When the decision component 115 has selected one or more segments for displaying the future region of interest during a next time interval, it instructs the downloader 111 to retrieve the selected segment or segments from the server. The downloader 115 sends a request for the segment(s) to the CDN and receives them. The downloader 111 then adds the segments to the end of the buffer.

The decision component 115 may also estimate the future region of interest for a time interval already covered by segments that have already been downloaded from the server and stored in the buffer. The estimation may change in time and this allows to correct for possible wrongly selected segments, i.e. segments that would eventually not cover the region of interest at the moment of display. If the decision component discovers such a segments in the buffer, it will flush the segments from the buffer. As there is a very high risk that the following segments in the buffer covering the following time intervals are also no longer correct, the decision component may also flush all following segments from the buffer. The decision component then repeats the estimation of the future region of interest and selection of the related segments for all time intervals that were flushed.

The manifest parser 116 may further obtain quality information from the manifest file specifying that the segments are available in different versions with different qualities. The quality may for example be specified by the resolution of the segment or the bit rate. The quality information may further comprise information about the encoder used for encoding the video and/or audio in the panoramic video. This information is then also made available to the decision component 115 that uses the quality information to make a further selection of the tiles and thus the segments to be downloaded, i.e. select a version of the segments in terms of resolution, bit rate and/or encoder used. For example, the decision component may select the tiles such that the total resolution of the region of interest covered by the selected tiles is higher than the resolution of the display 114.

The client 100 may further comprise a bandwidth tracker 117 providing bandwidth information to the decision component 115. This tracker 117 receives information from the downloader 111 about the speed and thus the time it takes to receive a segment. The decision component 115 may then use this bandwidth information when selecting the tiles and thus the segments. For example, when the component 115 has several options for selecting tiles or several versions of segments within selected tiles, it may select the one or more segment covering the future region of interest that can be downloaded before the display will fetch it from the buffer 112. Depending on the quality information received from the manifest parser the time to download each possible segment is calculated using the bandwidth information form the tracker 117. The decision component then select the segments that can be downloaded before the display will fetch it from the buffer 112 and from those segments, it selects the ones with the best quality, for example highest bit rate, in a resolution that matches the display.

Sometimes, fluctuations in the capacity of the network may occur making the information of the bandwidth tracker no longer accurate for some small time. To overcome this kind of situations, the decision component will make sure that there is always a minimum number of segments in the buffer in order to have enough segments available for the display. Therefore, when selecting the quality of the segments, the decision component may also make sure that the size of the segment is such that it can be downloaded and stored in the buffer before the buffer reaches a minimum number of segments and thus time intervals for display.

The estimation of the future region of interest by the decision component may be performed in several ways. Some examples are described hereafter.

In a first way of estimating the future region of interest, the decision component 115 makes use of the complete tracked region of interest information provided by the tracker component 113. It does this by calculating predictions of the future location of the region of interest by extrapolating the tracked region of interests up to the time interval for which the future region of interest needs to be calculated. For instance this can be achieved by fitting the observed trajectory of the region of interest with a parameterized model, and then using this model to generate predictions of the future positions. The decision component then determines the future region of interest such that it comprises the extrapolated region of interest. The estimated future region of interest may still be a bit bigger than the extrapolated one to take into account possible errors by the extrapolation process. During display, the display may then further crop the segment to match the actual region of interest as described before. This way of estimating the future region of interest is particularly useful when the region of interest is dynamic, for example due to a panning or zooming operation performed by the user.

In a second way of estimating the future region of interest, both the decision component and tracker component make use of meta information that is further comprised in the manifest information. This meta information provides information about the video content within a specific tile. This meta information may highlight popular events happening within the video stream of the video tile. Some examples of meta information are:
- "goal": indicating that in this video tile and optionally within the time information of the video a goal of soccer game is captured.
- "guitar solo": if the panoramic video captures a concert, this meta information indicates that a guitar solo can be seen in this video tile.
- "popular": this meta information indicates that this video tile is popular among the people who watched the panoramic video.
   The tracker component will correlate the tracked regions of interest with tracked meta information. It will thus make a selection of the meta information that occurs in the tiles comprised within the tracked regions of interest. By this tracked meta data, the decision component then has information on content that is comprised within the tracked regions of interest. This way, as an estimation for the future region of interest, the decision components defines a future region of interest that comprises all the tiles related to the tracked meta data. For example, when a user is looking to a panoramic video of a concert and follows the lead singer, the tracked region of interest will always comprise this lead singer. The meta information provided by the manifest parser identifies tiles with the meta information "lead singer". The tracker component will assign the meta information "lead singer" to the tracked user information as the tiles with the "lead singer" tag always occur in the tracked regions of interest. The decision component will then select tiles with the "lead singer" meta information associated with it and define the future region of interest such that it comprises at least all these tiles.

In a third way of estimating the future region of interest, a region of interest is defined that comprises at least the current region of interest. This is a much simpler way of estimating compared with the ones above and allows to quickly estimate the future region of interest.

These three ways of estimating the future region of interest may also be freely combined. For example by defining a future region of interest comprising both the current region of interest and the extrapolated region of interest.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims, Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A video client (100) for panoramic video consumption, said video client (100) comprising:
- a manifest parser (116) able to produce manifest information about segments of said panoramic video, said manifest information comprising position information about the position of tiles (30) comprising said segments within said panoramic video and time information about the time interval of said segments within each of said tiles of said panoramic video; and
- a buffer (112) able to temporarily store segments of said panoramic video; and
- a display (114) able to fetch next segments (34) covering a first time interval from said buffer (112) and to display a current user's region of interest (33) in said panoramic video using said next segments; and
- a tracker component (113) able to keep track of said current user's region of interest in said panoramic video to thereby generate tracked region of interest information;
- a downloader (111) able to send a request for a panoramic video to a server (102) and to receive one or more selected segments of one or more selected tile of said panoramic video in response to said request and store said selected segments in said buffer (112); and
- a decision component (115) able to
a) estimate a future region of interest to be displayed by said display using said one or more selected segment covering a second time interval; and
b) select said one or more selected segment based on said manifest information and said future region of interest; said one or more selected segment each covering said second time interval according to said time information; said one or more selected segment covering a total area according to said position information covering said future region of interest;
c) generate said request for said downloader,
d) instruct said downloader to send said request.

2. The video client (100) according to claim 1 wherein said manifest information is obtained by parsing a manifest file received from said server.

3. The video client (100) according to claim 1 or 2 wherein said current region of interest is an area within said panoramic video defined by interactions of a user with said display.

4. The video client (100) according to any one of claims 1 to 3 wherein said decision component (115) is further able to
e) flush one or more segments from said buffer.

5. The video client (100) according to any one of claims 1 to 4 wherein said manifest information comprises quality information about the quality and size of said segments.

6. The video client (100) according to claim 5 wherein said quality information comprises the resolution and/or the bit rate of said segments.

7. The video client (100) according to any one of claims 1 to 6 further comprising a bandwidth tracker (117) adapted to calculate bandwidth information comprising information from said downloader (111) about the speed of said receiving; and wherein said decision component is further able to select said one or more selected segment based on said bandwidth information.

8. The video client according to claim 5 or 6 and claim 7 wherein said decision component is further able to calculate a download time interval as a time interval for receiving said one or more selected segment from said server based on said quality information and said bandwidth information; and wherein said one or more selected segment have the highest quality while said download interval ends before said second time interval.

9. The video client according to claim 5 or 6 and claim 7 wherein said decision component is further able to calculate a download time interval as a time interval for receiving said one or more selected segment from said server based on said quality information and said bandwidth information; and wherein said one or more selected segment have the highest quality while said download interval ends before a moment in time where said buffer has less than a minimal number of segments or less than a minimal amount of seconds for playing all segments from said buffer.

10. The video client according to any one of the claims 1 to 9 wherein said decision component is further able to extrapolate said tracked region of interest in time to obtain a first estimated region of interest for said second time interval; and wherein said future region of interest covers said estimated region of interest.

11. The video client according to any one of the claims 1 to 10 wherein said manifest information comprises meta information about content of a tile in said panoramic video; and wherein said tracker component is able to relate said meta information defining related meta information with a tracked region of interest within said tracked region of interest information if said meta information corresponds to a tile overlapping said tracked region of interest; and wherein said decision component is further able to obtain a second estimated region of interest for said second time interval based on said related meta information; and wherein said future region of interest covers said second estimated region of interest.

12. The video client according to any one of claims 1 to 11 wherein said future region of interest covers at least the area of said current region of interest.
